(19) Europäisches Patentamt / European Patent Office / Office européen des brevets

(11) **EP 4 369 204 A1**

(12) **EUROPEAN PATENT APPLICATION**

(43) Date of publication:
**15.05.2024 Bulletin 2024/20**

(21) Application number: **23206341.2**

(22) Date of filing: **27.10.2023**

(51) International Patent Classification (IPC):
**G06F 11/36** (2006.01)     **G06F 11/07** (2006.01)
**G06F 11/34** (2006.01)

(52) Cooperative Patent Classification (CPC):
**G06F 11/3612; G06F 11/3636; G06F 21/55;**
**G06N 20/00;** G06F 11/079; G06F 11/3476;
G06F 2201/86; G06F 2201/865

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.11.2022 FI 20226016**

(71) Applicant: **Nokia Solutions and Networks Oy**
**02610 Espoo (FI)**

(72) Inventors:
• **PAPILLON, Serge**
**75014 Paris (FR)**
• **LIMONTA, Gabriela**
**02210 Espoo (FI)**
• **EL ABED, Haithem**
**91300 Massy (FR)**
• **BOUTIGNY, Francois**
**91300 Massy (FR)**
• **MENSAH, Pernelle Cathel Sika**
**91300 Massy (FR)**

(74) Representative: **Nokia EPO representatives**
**Nokia Technologies Oy**
**Karakaari 7**
**02610 Espoo (FI)**

(54) **GRAPH COMPARISON-BASED BEHAVIOR ANALYSIS**

(57) Example embodiments of the present disclosure relate to graph comparison-based behavior analysis. A plurality of score trends is determined between a target graph corresponding to execution of an application and a plurality of reference graph associated with a plurality of behaviors of the application. A graph comprises nodes and edges. A node represents an inferred state during an event and retains a timestamp of occurrence of the corresponding event. An edge represents a transition between states represented by the nodes. A first reference graph is determined based on the plurality of score trends. The first reference graph matches with at least a part of the target graph corresponding to a first period of time during the execution of the application. A behavior analysis result is provided which indicates that the application performs a first behavior associated with the first reference graph during the first period of time.

EP 4 369 204 A1

## Description

### FIELDS

Various example embodiments of the present disclosure generally relate to the field of data analysis and in particular, to method, device, apparatus and computer readable medium for graph comparison-based behavior analysis.

### BACKGROUND

Software development processes, such as development security operation and maintenance (DevSecOps) practices have been involved in the development for an application or software. Such development processes can be used in different areas, including but not limited to communication areas. These development processes may perform security monitoring during the runtime of an application or container to detect a security incident or a deviation from known behaviors. The root cause of the detected security incident or deviation need to be analyzed.

### SUMMARY

In a first aspect of the present disclosure, there is provided a method. The method comprises obtaining a target graph corresponding to execution of an application. The target graph comprises nodes and edges. A node represents an inferred state of the application during an event and retains a timestamp of occurrence of the corresponding event. An edge represents a transition between states represented by the nodes. The method further comprises obtaining a plurality of reference graphs associated with a plurality of behaviors of the application, respectively. A reference graph comprises nodes and edges. A node represents an inferred state of an associated behavior during an event and retains a timestamp of occurrence of the corresponding event. An edge represents a transition between states represented by the nodes. The method further comprises determining a plurality of score trends between the target graph and the plurality of reference graphs during execution of the application. To determine the plurality of score trends, the method comprises: for a given reference graph, determining a plurality of matching scores between a plurality of sampled target graph of the target graph and the given reference graph, the plurality of sampled target graph corresponding to a plurality of different time intervals during the execution of the application; and determining a given score trend between the target graph and the given reference graph based on the plurality of matching scores. The method further comprises determining, based on the plurality of score trends, a first reference graph from the plurality of reference graphs. The first reference graph matches with at least a part of the target graph corresponding to a first period of time during the execution of the application. The method further comprises providing a behavior analysis result indicating that the application performs a first behavior during the first period of time. The first behavior is associated with the first reference graph.

In a second aspect of the present disclosure, there is provided a device. The device comprises at least one processor; and at least one memory storing instructions that, when executed by the at least one processor, cause the device at least to perform the method according to the first aspect.

In a third aspect of the present disclosure, there is provided an apparatus. The apparatus comprises means for obtaining a target graph corresponding to execution of an application. The target graph comprises nodes and edges. A node represents an inferred state of the application during an event and retains a timestamp of occurrence of the corresponding event. An edge represents a transition between states represented by the nodes. The apparatus further comprises means for obtaining a plurality of reference graphs associated with a plurality of behaviors of the application, respectively. A reference graph comprises nodes and edges. A node represents an inferred state of an associated behavior during an event and retains a timestamp of occurrence of the corresponding event. An edge represents a transition between states represented by the nodes. The apparatus further comprises means for determining a plurality of score trends between the target graph and the plurality of reference graphs during execution of the application. The means for determining the plurality of score trends comprises for a given reference graph, means for determining a plurality of matching scores between a plurality of sampled target graph of the target graph and the given reference graph, the plurality of sampled target graph corresponding to a plurality of different time intervals during the execution of the application; and means for determining a given score trend between the target graph and the given reference graph based on the plurality of matching scores. The apparatus further comprises means for determining, based on the plurality of score trends, a first reference graph from the plurality of reference graphs. The first reference graph matches with at least a part of the target graph corresponding to a first period of time during the execution of the application. The apparatus further comprises means for providing a behavior analysis result indicating that the application performs a first behavior during the first period of time. The first behavior is associated with the first reference graph.

In a fourth aspect of the present disclosure, there is provided a computer readable medium. The computer readable medium comprises instructions stored thereon for causing an apparatus to perform at least the method according to the first aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, where:

FIG. 1 illustrates an example environment in which example embodiments of the present disclosure can be implemented;

FIG. 2 illustrates an example of graph according to some example embodiments of the present disclosure;

FIG. 3 illustrates a flowchart of a method for behavior analysis according to some example embodiments of the present disclosure;

FIG. 4 illustrates an example of similarity score trends according to some example embodiments of the present disclosure;

FIG. 5A-FIG. 5D illustrate examples of inclusion score trends according to some example embodiments of the present disclosure;

FIG. 6 illustrates an example block diagram of example architecture for behavior analysis according to some example embodiments of the present disclosure;

FIG. 7A illustrates examples of application behaviors according to some example embodiments of the present disclosure;

FIG. 7B and FIG. 7C illustrate examples of reference graphs according to some example embodiments of the present disclosure;

FIG. 7D illustrates an aggregated reference graph according to some example embodiments of the present disclosure;

FIG. 8 illustrates an example target graph with a deviation according to some example embodiments of the present disclosure;

FIG. 9 illustrates a simplified block diagram of a device that is suitable for implementing example embodiments of the present disclosure; and

FIG. 10 illustrates a block diagram of an example computer readable medium in accordance with some example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As mentioned above, security incidents or deviations from known behavior may be detected during the runtime of an application. In some mechanisms, an analyst such as a member of a security operation center (SOC) team may investigate the security incident or the deviation to identify a root cause of the security incident or deviation. However, it is a time-consuming and challenging task for the analyst to identify the root cause. For example, the analyst needs to filter out false positives from the monitored security incidents. For the real incidents, the analyst needs to identify where in the code is the root cause of the incident in order to fix and prevent the incident from happening in the future. It is difficult for the analyst to identify the root cause because the analyst may not have any additional details or context for the detected incident.

In some mechanisms, it has been proposed to filter out false positives from the detected incidents by comparing the incidents with baselines of known behaviors. However, such mechanisms cannot provide any information for the root cause analysis.

According to some example embodiments of the present disclosure, there is provided a scheme for graph comparison-based behavior analysis. In this scheme, a plurality of score trends is determined between a target graph corresponding to execution of an application and a plurality of reference graphs. The plurality of reference graphs is associated with a plurality of behaviors of the application. A graph comprises nodes and edges. A node represents an inferred state during an event and retains a timestamp of occurrence of the corresponding event. An edge represents a transition between states represented by the nodes. A first reference graph is determined from the plurality of behaviors based on the plurality of score trends. The first reference graph matches with at least a part of the target graph corresponding to a first period of time during the execution of the application. A behavior analysis result is provided to indicate the application performs a first behavior associated with the first reference graph during the first period of time.

In this way, the behavior analysis result can provide information of behaviors perform during the execution of the application. Thus, if an incident or a deviation is detected, which behavior is performed at the time of the incident or deviation can be determined. By determining the behavior and providing the behavior analysis result, it can help the analyst to identify the root cause of the incident or deviation.

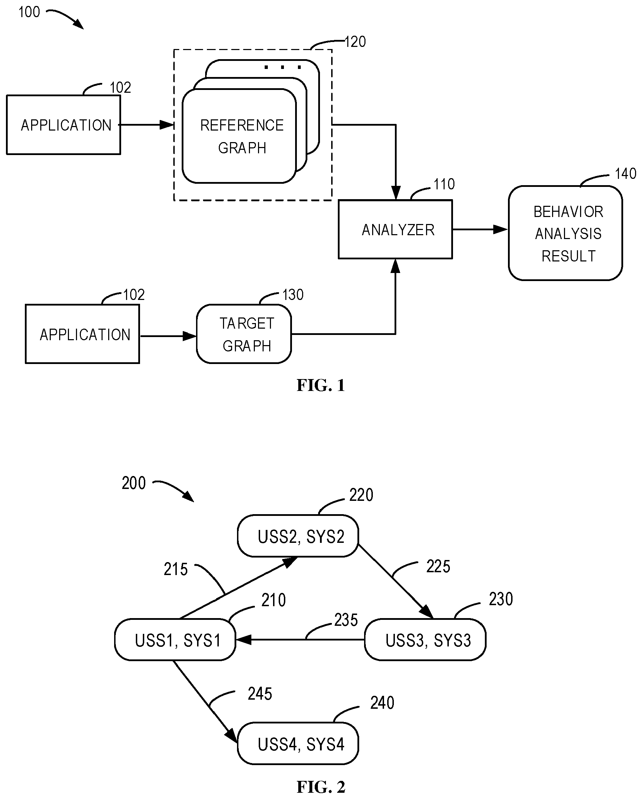

FIG. 1 illustrates an example environment 100 in which example embodiments of the present disclosure can be implemented. It is to be understood that the environment 100 shown in FIG. 1 is only for the purpose of illustration, without suggesting any limitation to functions and the scope of the embodiments of the present disclosure.

In the environment 100, an analyzer 110 receives a plurality of reference graphs 120 of an application 102 and a target graph 130 of the application 102. The application 102 may comprise a microservice or a program. The microservice may run on a server. The microservice may also run on a user device, embedded device, or mobile device, such as smartphones, wearable wireless devices, IoT devices, personal computers, or the like. The microservice may allow dividing an application into a set of loosely coupled services that communicate with one another, allowing the independent development of each of these services, the continuous integration and deployment of them.

The plurality of reference graphs 120 are associated with a plurality of behaviors of the application 102. A reference graph comprises nodes and edges. A node represents an inferred state of an associated behavior during an event and retains a timestamp of occurrence of the corresponding event. It is to be understood that the node may retain one or more timestamps of occurrence of the corresponding event, as the corresponding event may occur one or more times during execution of the behavior. An edge represents a transition between states represented by the nodes.

The target graph 130 corresponds to execution of the application 102. Likewise, the target graph 130 comprises nodes and edges. A node represents an inferred state of the application 102 during an event and retains a timestamp of occurrence of the corresponding event. It is to be understood that the node may contain one or more timestamps of the occurrence of the corresponding event. The number of timestamps may be associated with the number of times the event occurs during the execution of the application 102. An edge between nodes represents a transition between states represented by the nodes.

In some example embodiments, the plurality of reference graphs 120 may be collected by separate apparatus in laboratory or collected in a testing environment. The plurality of reference graphs 120 may be stored in a database. The analyzer 110 may obtain the plurality of reference graphs 120 from the database. The plurality of reference graphs 120 may be represented as GC = $\{sG_i\}_{i \in [0,m]}$, where $sG_i$ is the reference graph of behavior; (also referred to as sub-behavior;) and m+1 is the size of the plurality of reference graphs.

In some example embodiments, the target graph 130 may be generated based on data from execution of the application 102 at runtime by a graph builder. The analyzer 110 may obtain the target graph 130 from the graph builder. Alternatively, or in addition, in some example embodiments, the analyzer 110 itself may obtain data from execution of the application 102 at runtime and generate the target graph 130 based on the data.

FIG. 2 illustrates an example graph 200 according to some example embodiments of the present disclosure. The graph 200 may be a reference graph or the target graph 130. The graph 200 comprises a plurality of nodes, comprising a node 210, a node 220, a node 230 and a node 240. Each node may represent an inferred state during an event. In some example embodiments, the inferred state may be bivalued as {used stack size (USS), syscall (SYS)}. The USS represents a used stack size of the event associated with the node. The SYS represents the system call (syscall) of the event associated with the node. For example, the node 210 may represent an inferred state {USS1, SYS2}, and the node 220 may represent an inferred state {USS2, SYS2}. It is to be understood that the node in the graph 200 may comprise less or more inferred state information than the {USS, SYS}. The inferred state of the node may be represented in other form or contain other state information.

Each node may retain a timestamp of occurrence of the corresponding event. For example, the node 210 may retain two timestamps of occurrence of the corresponding event. For another example, the node 220 may retain one timestamp of the corresponding event.

The graph 200 further comprises a plurality of edges between the nodes, comprising an edge 215, an edge 225, an edge 235 and an edge 245. The edge 215 represents a transition between states represented by the nodes 210 and 220. That is, the edge 214 represents a transition from state {USS1, SYS1} to state {USS2, SYS2}. The edge 225 represents a transition between states represented by the nodes 220 and 230. The edge 235 represents a transition between states represented by the nodes 230 and 210. The edge 245 represents a transition between states represented by the nodes 210 and 240.

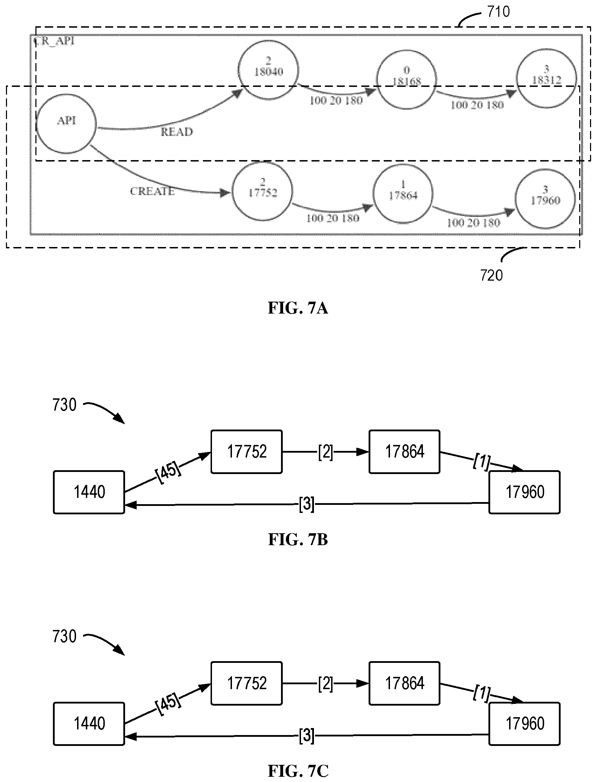

It is to be understood that the graph 200 is only for the purpose of illustration, without suggesting any limitation. The target graph and the reference graph may be in any suitable form. The target graph may also be a target model, and the reference graph may also be a reference model. More example graphs may be described with respect to FIG. 7B to FIG. 8 in the following paragraphs.

In some example embodiments, the graph 200 may be associated with a trace. A trace may correspond to a sequential list of timestamped inferred states and transitions between the inferred states. For example, the trace corresponding to the graph 200 may be represented as: uss1, sys1 -> uss2, sys2 -> uss3, sys3 -> uss1, sys1 -> uss4, sys4.

The trace may also be represented as trace = $\{uss_i, sys_i\}_{i \in [0,n]}$, where i=0 is the last event received and n+1 is the depth of the trace. It is to be understood that the example of trace is only for the purpose of illustration, without suggesting any limitation. The trace may be represented in any suitable forms. Scope of the present disclosure is not limited in this regard. In some example embodiments, the graph and the trace may be converted between each other. For example, the analyzer 110 may obtain the target graph 130 based on a target trace corresponding to execution of the application 102.

Still referring to FIG. 1, the analyzer 110 provides a behavior analysis result 140 based on the reference graphs 120 and the target graph 130. For example, the analyzer 110 may determine the behavior analysis result 140 based on comparisons between the target graph 130 and the plurality of reference graphs 120. If the analyzer 110 determines that a first reference graph from the plurality of reference graphs 120 matches with at least a part of the target graph 130 corresponding to a first period of time during the execution of the application 102, the behavior analysis result 140 indicates that the application 102 performs a first behavior during the first period of time. The first behavior is associated with the first reference graph.

In some example embodiments, the analyzer 110 may comprise a device performing one or more microservices. Alternatively, or in addition, the analyzer 110 may comprise certain functions in a device at production or at runtime. The microservice may run on the device, as well. The device may comprise an electronic device or a terminal device, including but not limited to a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

In some example embodiments, the analyzer 110 may be implemented in a communication network. As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

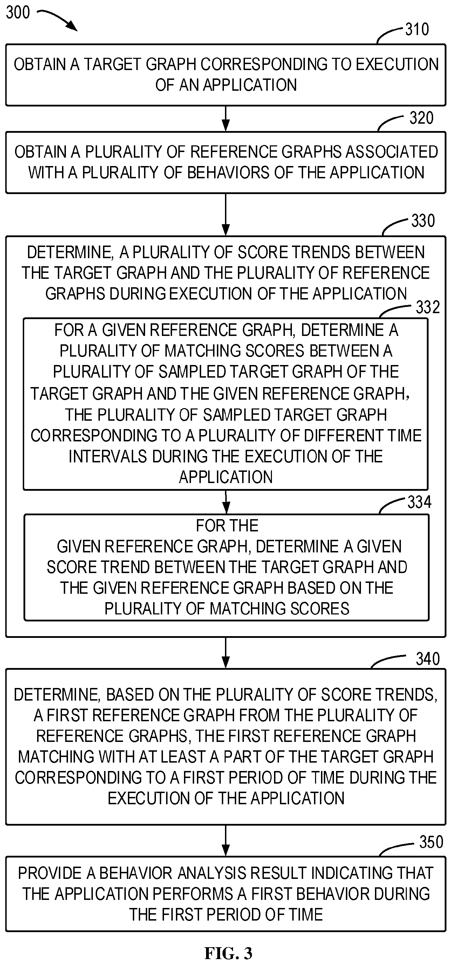

As discussed above, the analyzer 110 determines the behavior analysis result 140 based on graph comparisons. Details regarding the determination of the behavior analysis result 140 will be described with respect to FIG. 3 below. FIG. 3 illustrates a flowchart of a method 300 for behavior analysis according to some example embodiments of the present disclosure. For the purpose of discussion, the method 300 will be described from the perspective of the analyzer 110 in FIG. 1. It is to be understood that the method 300 may also be implemented by any other suitable device or apparatus.

At block 310, the analyzer 110 obtains the target graph 130 corresponding to execution of the application 102. For example, the analyzer 110 may collect measured data during the execution of the application 102 at runtime and determine the target graph 130 based on the measured data. The measured data during the execution may comprise data of a stream of events, such as timestamps, used stack size and syscall. Alternatively, or in addition, the analyzer 110 may collect measured data during the execution of the application 102 at runtime and determine a target trace corresponding to the execution of the application 102. The target graph 130 or a part of the target graph 130 may be obtained by converting the target trace or a corresponding part of the target trace into a graph.

At block 320, the analyzer 110 obtains a plurality of reference graphs 120 associated with a plurality of behaviors of the application 102. In some example embodiments, the analyzer 110 may obtain the plurality of reference graphs 120 from a database. Alternatively, in some example embodiments, the analyzer 110 may generate the plurality of reference graphs based on execution data during testing. For example, the analyzer 110 may collect execution data of a given behavior of the application 102 associated with the given reference graph by instructing test execution of the given behavior within a test environment. The analyzer 110 may extract, from the execution data, events occurred during the test execution of the given behavior and timestamps of the events. The analyzer 110 may generate the given reference graph based on the events and the timestamps of the events.

At block 330, the analyzer 110 determines a plurality of score trends between the target graph 130 and the plurality of reference graphs 120 during execution of the application 102. At block 332, for a given reference graph, the analyzer 110 determines a plurality of matching scores between a plurality of sampled target graph of the target graph and the given reference graph. The plurality of sampled target graph corresponds to a plurality of different time intervals during the execution of the application. At block 334, the analyzer 110 determines a given score trend between the target graph 130 and the given reference graph based on the plurality of matching scores.

In some example embodiments, at block 332, for a given timestamp of an event of the plurality of events represented by nodes of the target graph 130, the analyzer 110 may extract a sampled graph from the target graph 130. The sampled graph comprises a part of the target graph 130 corresponding to a time interval from an end event of the application 102 to the given event during the execution of the application 102. For example, a first sampled graph may comprise a first part of the target graph 130 corresponding to a time interval from the end event (last event) to a penultimate event. A second sampled graph may comprise a second part of the target graph 130 corresponding to a time interval from the end event (last event) to an antepenultimate event. Other sampled graph may be sampled in a similar backward way. In some example embodiments, the sampled graph may correspond to a time interval between two events, or a time interval between more than two events. The sampling length of the sampled target graph may be predefined or automatically adjusted. Scope of the present application is not limited in this regard.

The analyzer 110 may determine a given matching score between the sampled graph and the given reference graph. Such sampled graphs may be referred to as backward sampled graphs. The score trend determined based on the backward sampling may be referred to as backward score trend.

Alternatively, or in addition, in some example embodiments, at block 332, for a given timestamp of an event of the plurality of events represented by nodes of the target graph, the analyzer 110 may extract a sampled graph from the target graph 130. The sampled graph comprises a part of the target graph corresponding to a time interval from a start event of the application to the given event during the execution of the application 102. For example, a first sampled graph may comprise a first part of the target graph 130 corresponding to a time interval from the start event to a second event. A second sampled graph may comprise a second part of the target graph 130 corresponding to a time interval from the start event to a second event. Other sampled graph may be sampled in a similar way. In some example embodiments, the sampled graph may correspond to a time interval between two events, or a time interval between more than two events. The analyzer 110 may determine a given matching score between the sampled graph and the given reference graph. Such sampled graphs may be referred to as forward sampled graphs. The score trend determined based on the forward sampling may be referred to as forward score trend.

As discussed above, the target graph 130 may be converted from a target trace. In some example embodiments, the analyzer 110 may obtain the target trace instead of the target graph 130 at block 310. At block 330, the analyzer 110 may determine a plurality of score trends between the target trace and the plurality of reference graphs 120. The target trace may be sampled backward or forward into a plurality of sampled traces. The plurality of sampled traces corresponds to a plurality of sampled target graph. That is, the plurality of sampled target graph may be converted from the plurality of sampled trace. For example, at block 332, for a given reference graph, the analyzer 110 may determine a plurality of matching scores between a plurality of sampled target graph converted from the plurality of sampled trace and the given reference graph.

In some example embodiments, at block 334, the analyzer 110 may determine the given matching score between the sampled graph and the given reference graph by determining a similarity between the sampled graph and the given reference graph. The analyzer 110 may use any suitable functions or method to determine the similarity, including but not limited to graph edit distance, dissimilarity/similarity function, Jaccard index, or the like.

For example, the similarity between the sampled graph and the given reference graph may be determined based on a graph edit distance between the sampled graph and the given reference graph. The larger the graph edit distance between two graphs, the lower similarity between these two graphs. Given that a graph is a collection of nodes and edges, the distance between two graphs $G_1$ and $G_2$ may be defined as the shortest list of elementary change operations needed to transform $G_1$ into $G_2$, or vice versa. The elementary change operations include but not limited to node addition, link addition, node edit, link edit, node removal and link removal.

In some example embodiments, the graph edit distance between two graphs $G_1$ and $G_2$ may be determined by an approximation by using the following (1):

$$GE_{dist}(G_1, G_2) =$$

$$\max\left(\left|G_1 - G_1 \cap G_2\right|_{nodes}, \left|G_2 - G_1 \cap G_2\right|_{nodes}\right) + \max\left(\left|G_1 - G_1 \cap G_2\right|_{edges}, \left|G_2 - G_1 \cap G_2\right|_{edges}\right) \quad (1)$$

where $|G|$ denotes number of elements in G (nodes + edges), $|G|_{nodes}$ denotes number of nodes in G, and $|G|_{edges}$ denotes number of edges in G. If $GE_{dist}(G_1, G_2) = 0$, $G_1 = G_2$. Otherwise, $GE_{dist}(G_1, G_2) < |G_1 \cup G_2|$.

In some example embodiments, the similarity between the sampled target graph and the given reference graph may be determined based on a dissimilarity between these two graphs. The lower dissimilarity between these two graphs, the higher similarity. For example, the dissimilarity may be determined by using the following (2):

$$f_{dissimilarity}(G_1, G_2) = \frac{GE_{dist}(G_1, G_2)}{|G_1 \cap G_2|} \quad (2)$$

If $G_1 = G_2$, $f_{dissimilarity}(G_1, G_2) = 0$. If $G_1 \cap G_2 = \varnothing$, $f_{dissimilarity}(G_1, G_2) = +\infty$.

In some example embodiments, the similarity between the sampled target graph and the given reference graph may be determined based on a Jaccard index between these two graphs. The higher Jaccard index between these two graphs, the higher similarity. For example, the Jaccard index may be determined by using the following (3):

$$f_{similarity}(G_1, G_2) = \frac{|G_1 \cap G_2|}{|G_1 \cup G_2|} \quad (3)$$

If $G_1 = G_2$, $f_{similarity}(G_1, G_2) = 1$. If $G_1 \cap G_2 = \varnothing$, $f_{similarity}(G_1, G_2) = 0$.

Alternatively, or in addition, in some example embodiments, at block 334, the analyzer 110 may determine the given matching score between the sampled graph and the given reference graph by determining an inclusion probability of the sampled graph being included by the given reference graph. For example, the inclusion probability between two graphs may be determined by using the following (4):

$$f_{inclusion}(G_1, G_2) = \frac{|G_1 \cap G_2|}{|G_1|} \quad (4)$$

If $G_1 \subset G_2$: $G_1 \cap G_2 = G_1 \Rightarrow f_{inclusion}(G_1, G_2) = 1$. If $G_1 \cap G_2 = \varnothing$, $f_{inclusion}(G_1, G_2) = 0$. $f_{inclusion}(G_1, G_2) \subset [0,1]$.

It is to be understood that during operation, and especially when a deviation happens, the target trace or the target graph may not include a complete behavior or a sub-behavior. Only a part of the behavior may be recorded. If only a small portion of the behavior is recorded in the target trace or the target graph, using the inclusion probability may recognize if the sample target graph from the target trace is included in the reference graphs associated with the behaviors. Instead of dividing by the number of elements in the union of both graphs as in (3), the number of elements in $G_1$ will be kept in (4), which includes all elements of the union except those unique to $G_1$. By using the inclusion function described above, it may look at the inclusion of the graph derived from the target trace in a graph of the given behavior.

It is to be understood that the above graph edit distance, dissimilarity/similarity function, inclusion function is only for the purpose of illustration, without suggesting any limitations. Any suitable functions or methods may be applied to determine the score trends.

At block 340, the analyzer 110 determines, based on the plurality of score trends, a first reference graph from the plurality of reference graphs 120. The first reference graph matches with at least a part of the target graph 130 corresponding to a first period of time during the execution of the application 102.

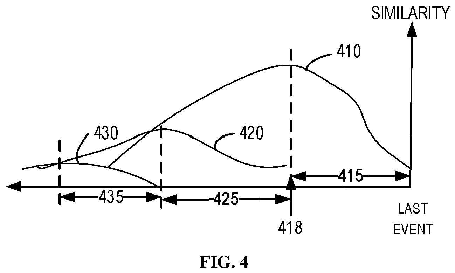

FIG. 4 illustrates examples of score trends 410, 420 and 430 according to some example embodiments of the present disclosure. The score trends 410, 420 and 430 in FIG. 4 are determined by using the Jaccard index shown in (3) based on a backward sampling. The score trend 410 illustrates a similarity score trend from the last event to the past events between the target graph 130 (or target trace) and a first reference graph associated with a first behavior. The score trend 420 illustrates a similarity score trend between the target graph 130 (or target trace) and a second reference graph associated with a second behavior. The score trend 430 illustrates a similarity score trend between the target graph 130 (or target trace) and a third reference graph associated with a third behavior. The horizontal axis of these score trends represents events from the end event (or last event) to a start event. The vertical axis represents the similarity score.

In some example embodiments, if a first score trend for the first reference graph indicates an increase of a similarity from an end event to a start event during the first period of time, and each of other score trends of the plurality score trends indicates one of the following: a lower similarity than the similarity of the first score trend from an end event to a start event during the first period of time, or a decrease of a similarity from an end event to a start event during the first period of time, the analyzer 110 may determine that the first reference graph matches the target graph during the first period of time.

Taking FIG. 4 as an example, during the first period of time 415, the score trend 410 indicates an increase from the last event backward, the score trend 420 and the score trend 430 indicate a lower similarity. Thus, the analyzer 110 may determine that a first reference graph associated with the score trend 410 matches with the target graph or target trace during the first period of time 415.

In some example embodiments, the analyzer 110 may determine that at point 418, the score trend 410 is going down and the score trend 420 is going on. The analyzer 110 may determine that the behavior may be changed at the point 418. During a second period of time 425, the analyzer 110 may determine that a second reference graph corresponding to the score trend 420 matching with at least a part of the target graph 130 corresponding to a second period of time 425 during the execution of the application 102. Likewise, the analyzer 110 may determine that during a period of time 435, a third reference graph corresponding to the score trend 430 matching with at least a part of the target graph 130.

By analyzing the dynamicity of these score trends, it can evaluate the indices of the different shifts in behaviors and allow to reconstruct the functional timeline of the application 102.

Examples regarding analyzing the behaviors of the application 102 based on the score trends have been described above. In the above examples, the analysis is performed in a backward way. That is, the behavior changes are determined from the last event to the past events. Alternatively, or in addition, in some example embodiments, the analysis may be performed in a forward way. For example, the analyzer 110 may determine that the third reference graph associated with the score trend 430 is decreasing forward from the start event to subsequent events, and other score trends are increasing, then the analyzer 110 may determine that the third reference graph matches with the target graph in the period of time 435.

Example embodiments regarding performing the behavior analysis based on similarity score trends from the backward sampling have been described. It is to be understood that the behavior analysis may also be performed based on the similarity score trends or other score trends from a forward sampling. The behavior analysis based on forward sampled score trends may be performed in a similar way which will not be repeated here.

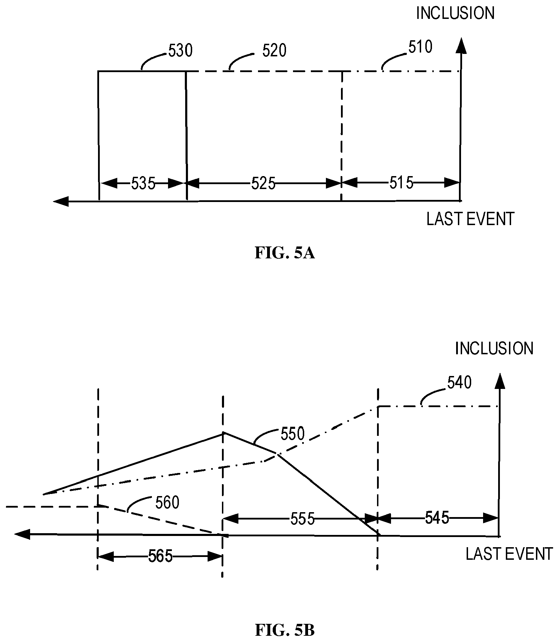

FIG. 5A illustrates an example of score trends according to some example embodiments of the present disclosure. The score trends 510, 520 and 530 in FIG. 5A are determined by using the inclusion function as shown in (4). The score trend 510 illustrates an inclusion score trend from the last event to the past events between the target graph 130 (or target trace) and a first reference graph associated with a first behavior. The score trend 520 illustrates an inclusion score trend between the target graph 130 (or target trace) and a second reference graph associated with a second behavior. The score trend 530 illustrates an inclusion score trend between the target graph 130 (or target trace) and a third reference graph associated with a third behavior. The horizonal axis of these score trends represents events from the end event (or last event) to a start event. The vertical axis represents the inclusion score such as an inclusion probability.

In some example embodiments, if a first score trend for the first reference graph indicates an increase of an inclusion probability from an end event to a start event during the first period of time, and each of other score trends of the plurality matching trends indicates a decrease of an inclusion probability from an end event to a start event during the first period of time, the analyzer 110 may determine that the first reference graph matches with the target graph 130 during the first period of time.

Alternatively, or in addition, in some example embodiments, if a first score trend for the first reference graph indicates an increase or an invariance of an inclusion probability from an end event to a start event during the first period of time, and each of other score trends of the plurality score trends indicates a lower inclusion probability than the inclusion probability of the first matching trend from an end event to a start event during the first period of time, the analyzer 110 may determine that the first reference graph matches with the target graph 130 during the first period of time.

Taking the score trends shown in FIG. 5A as an example, the analyzer 110 may determine that a reference graph associated with the score trend 510 matches with the target graph 130 during the duration 515, a reference graph associated with the score trend 520 matches with the target graph 130 during the duration 525, and a reference graph associated with the score trend 530 matches with the target graph 130 during the duration 535.

In some example embodiments, different behaviors may have elements in common. In such cases, the score trends will not go down to zero when the application 102 is performing another behavior. FIG. 5B illustrates another example of inclusion score trends. In the example of FIG. 5B, different behaviors have elements in common. By using the backward analysis described above on the score trends 540, 550 and 560, the analyzer 110 may determine that a reference graph associated with the score trend 540 matches with the target graph 130 during the duration 545, a reference graph associated with the score trend 550 matches with the target graph 130 during the duration 555, and a reference graph associated with the score trend 560 matches with the target graph 130 during the duration 565.

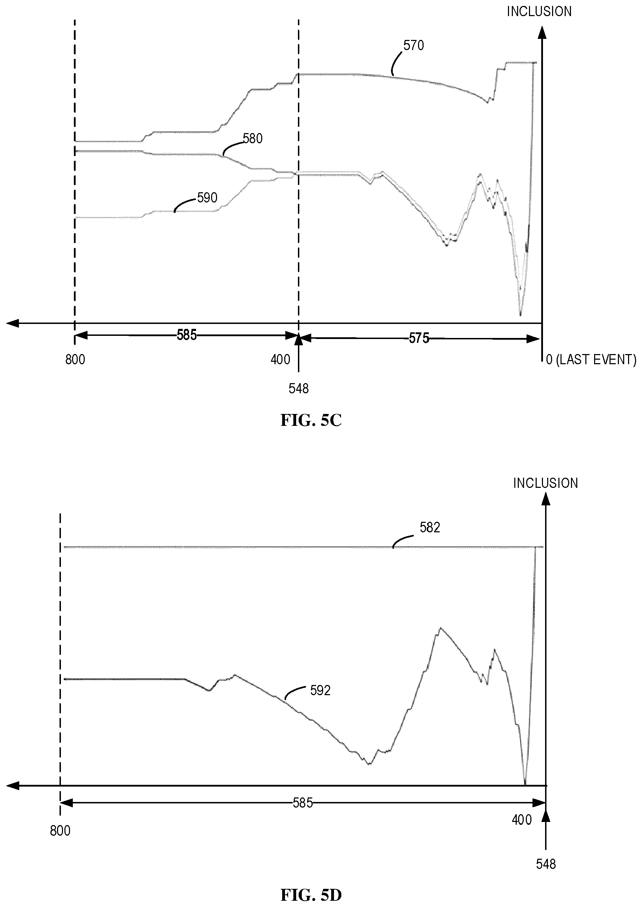

In some example embodiments, the inclusion score trends or the similarity score trends may experience some perturbations. The behavior analysis may perform based on a general changing trend of the score trends without considering the perturbations. For example, in the example of FIG. 5C, by analyzing the score trends 570, 580 and 590, the analyzer 110 may determine that a reference graph associated with the score trend 570 matches with the target graph 130 during the duration 575, a reference graph associated with the score trend 580 matches with the target graph 130 during the duration 585. The behavior changes at the point 548 (also referred to as an inflection point).

Alternatively, or in addition, in some example embodiments, if the analyzer 110 determines that the reference graph associated with the score trend 570 matches with the target graph 130 during the period of time 575, the analyzer 110 may update the target graph by removing the part of the target graph 130 corresponding to the period of time 575. The updated target graph corresponds to partial execution of the application 102 with events during the period of time 575 removed from the execution of the application 102. In some example embodiments where the sampled target graph are determined based on the target trace, the updated target graph may be recomputing based on the target trace by removing the part corresponding to the period of time 575.

In some example embodiments, the analyzer 110 may determine a plurality of further score trends between the updated target graph and the plurality of reference graphs during the partial execution of the application 102. FIG. 5D illustrates an example of updated score trends 582 and 592. The score trend 582 is associated with a reference graph associated with the score trend 580. The score trend 592 is associated with a reference graph associated with the score trend 590.

In some example embodiments, the analyzer 110 may determine, based on the plurality of further score trends, a third reference graph from the plurality of reference graphs 120. The third reference graph matches with at least a part of the updated target graph corresponding to a third period of time during the partial execution of the application 102. In the example of FIG. 5C, the analyzer 110 may determine that the reference graph associated with the updated score trend 582 matches with the updated target graph during the period of time 585.

By updating the target graph and the score trends, the updated score trends will be polluted by the already detected behavior during the period of time 575. In this way, it can analyze a more precise result for the period of time 585.

It is to be understood that although example embodiments regarding the behavior analysis have been described by using a backward way. In some example embodiments, the behavior analysis may be performed in a forward way. The score trends may be determined by a backward sampling and a forward sampling. Score of the present disclosure is not limited in this regard.

By using the graph comparison-based behavior analysis, it can get a timeline of the functionality of the application 102 or of the service.

Still refers to FIG. 3. At block 350, the analyzer 110 provides a behavior analysis result 140 indicating that the application 102 performs a first behavior during the first period of time. The first behavior is associated with the first reference graph. Alternatively, or in addition, in some example embodiments, the analyzer 110 may provide a further behavior analysis result indicating that the application 102 performs a second behavior during the second period of time. The second behavior is associated with the second reference graph.

In the example of FIG. 4, the analyzer 110 may provide a behavior analysis result 140 indicating that the application 102 performs a behavior associated with the score trend 410 during the period of time 415. The analyzer 110 may provide a further behavior analysis result indicating that the application 102 performs a behavior associated with the score trend 420 during the period of time 425. The analyzer 110 may provide a still further behavior analysis result indicating that the application 102 performs a behavior associated with the score trend 430 during the period of time 435.

Alternatively, or in addition, in some example embodiments, if the analyzer 110 determines that no reference graph from the plurality of reference graphs 120 matches with a part of the target graph 130 corresponding to a period of time during the execution of the application 102 at block 340, the analyzer 110 may send an alert to security operation center or personnel. The alert may indicate that the application 102 may be run in an anormal way. Examples of the alert include but not limited to a Hyper Text Transfer Protocol (HTTP) message, email, instant messaging (IM) message, short message service (SMS), cloud message, or the like. The alert or alert message may include information regarding matched behaviors shortly before a period during which the application behavior can't be matched to any reference behaviors. Furthermore, application specific data may be included in the alert or alert message. It is to be understood that the examples of alert are only for the purpose of illustration, without suggesting any limitation. Any suitable alert or message may be applied. Scope of the present disclosure is not limited in this regard.

Example method regarding graph comparison-based behavior analysis have been described with respect to FIG. 3. While only some blocks are shown in the method 300, the method 300 may comprise further operations described herein. While the method 300 is shown and described as being a series of acts that are performed in a sequence, it is to be understood and appreciated that the method is not limited by the order of the sequence. Some acts may occur in a different order than what is described herein. For example, the block 310 and block 320 may be performed in parallel. In addition, an act can occur concurrently with another act. Further, in some implementations, not all acts may be required to implement the method described herein.

Example embodiments regarding graph comparison-based behavior analysis have been described with respect to FIG. 1 to FIG. 5D. By using the graph comparison-based behavior analysis, it can obtain the behavior analysis result about which behaviors the application 102 performs during different periods of time. In some example embodiments, the graph comparison-based behavior analysis may be performed in combination with a deviation monitoring of the application. For example, in some example embodiments, if a failure of the application 102 is detected, the analyzer 110 may obtain the target graph 130 corresponding to the execution of the application 102 before the failure. The analyzer 110 may perform the graph comparison-based behavior analysis based on the obtained target graph 130. The analyzer 110 may provide the behavior analysis result for analysis of the failure. In this way, the behavior analysis result 140 may help the analyst to identify the root cause of the failure.

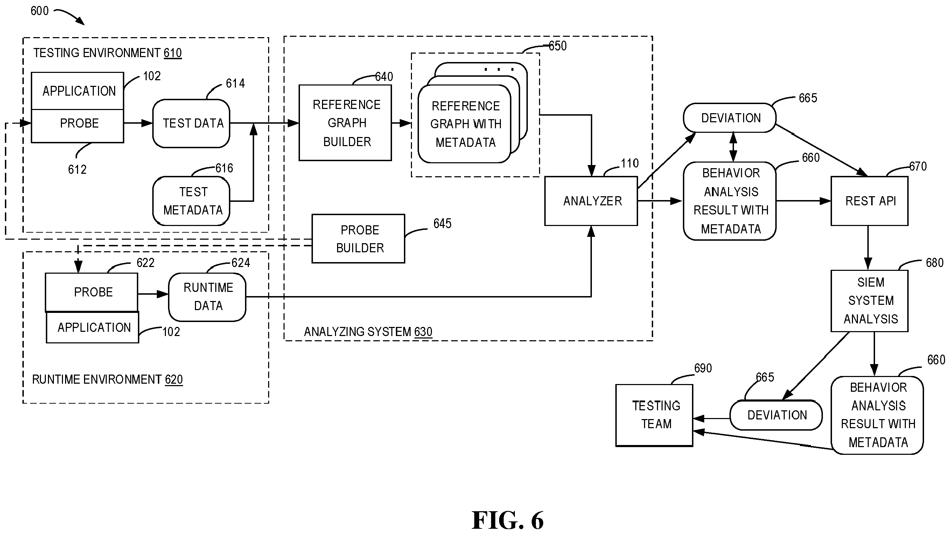

In some example embodiments, the analyzer 110 may obtain metadata associated with the first reference graph. The metadata may indicate at least one of the following: events occurred during the execution of the first behavior, functions of the events, an execution order of the events, or durations of the events. The analyzer 110 may provide the metadata for the analysis of the failure. By providing the behavior analysis result 140 together with the metadata of the first reference graph, the analyst may easily to perform the root cause analysis. The behavior analysis with metadata will be described with respect to FIG. 6 below.

FIG. 6 illustrates an example block diagram of example architecture 600 for behavior analysis with metadata according to some example embodiments of the present disclosure.

The architecture 600 may comprise a testing environment 610 where all the integration tests are run. It may be provisioned with a mechanism to collect syscalls (and other associated data, such as the used stack size, utime and stime). For example, in Linux system, the data collection may be achieved using extended Berkeley packet filter (eBPF) and its associated tool suite Berkeley packet filter (BPF) compiler collection (BCC).

In some example embodiments, the application 102 may comprise one of the following: a program, or a microservice against which the integration tests are run to measure its behavior.

In some example embodiments, a probe 612 may be an agent that collects the test data 614 such as the syscall data and sends it to the reference graph builder 640 (also referred to as a baseline builder). The test data 614 may be used to model the behavior of the application 102.

In some example embodiments, test metadata 616 may also be collected in the testing environment 610. The test metadata 616 comprise additional information about the test being run. It may include the name of the test (or events), the functions tested, timestamps, etc.

In some example embodiments, during the automated testing or a continuous integration (CI)/continuous delivery (CD) testing, the syscalls made by the application 102 may be collected and reference graphs for behaviors may be built. These reference graphs may be built either at the thread or process level. Each reference graph may be stored along with the test metadata (e.g., name of the test, functions tested and timestamps)

At the end of the automated testing, aggregate all the reference graphs may be aggregated to create the complete behaviors for the application 102. Each reference graph associated with a test will represent a behavior (or sub-behavior) for the application 102.

The architecture 600 may comprise a runtime environment 620 or a production environment where the application 102 (such as a monitored microservice) runs during its runtime. An analysis system 630 or monitoring system may monitor the runtime environment 620 to detect any deviations from the baselines/behaviors built during the integration testing stage. The runtime environment 620 may also be provisioned with a mechanism to collect syscalls, similar to the testing environment 610. For example, a probe 622 may be an agent that collects runtime data 624 (such as syscall data) and sends it to the analyzer 110 for analysis and detection of deviations.

In some example embodiments, the analyzing system 630 may comprise components for building reference graphs for the application 102 before deployed and for measuring and detecting deviations during the runtime of the application 102. These components may be in a logical grouping and they do not need to be deployed centrally in one server.

In some example embodiments, the analyzing system 630 may comprise the reference graph builder 640 to build reference graphs for the application 102 before deployed. In some example embodiments, the reference graph builder 640 may take the measured syscall data and test metadata and builds a reference graph for the monitored application 102. Each reference graph (also referred to as a baseline) represents an expected behavior (also referred to as a sub-behavior) for the application 102. Additionally, the reference graph builder 640 may aggregate the different reference graphs of the application 102 to define the expected behaviors of the application 102. The reference graph builder 640 may combine the reference graphs with the associated metadata. The reference graphs of different behaviors and associated metadata 650 are stored in a reference graphs and metadata database (DB) (not shown). The reference graphs and metadata DB may keep an inventory of each application (program/microservice) and its associated behaviors, sub-behaviors and test metadata.

In some example embodiments, the analyzing system 630 may further comprise a probe builder 645 to for deploying a monitoring probe to the environment where the program is running, such as the probe 612 in the testing environment 610 and the probe 622 in the runtime environment 620.

In some example embodiments, the analyzing system 630 may further comprise the analyzer 110. The analyzer 110 may take the runtime data 624 (such as measured syscall data) reported from the probe 612 during runtime and compares the runtime data 624 to the nearest stored behavior (from the reference graphs and metadata DB) to check that the application 102 is behaving as expected. For example, the analyzer 110 may use any suitable graph comparison-based behavior analysis described above with respect to FIG. 3 to FIG. 5D or any other suitable graph comparison-based behavior analysis method to identify the closest stored behavior.

In some example embodiments, if a deviation is detected, the analyzer 110 may forward the deviation information 665, information about the closest stored behavior with metadata 660 to security operation center or personal. For example, the closest stored behavior with metadata 660 may comprise information about the closest stored behavior and a timeline about what the application 102 was doing up to the point where the deviation occurred. This timeline may be built using the metadata and behaviors stored during the integration testing phase.

In some example embodiments, the analyzing system 630 may comprise a Representational State Transfer (REST) Application Programming Interface (API) 670. The REST API 670 may make it easy to expose the information about the application 102's behavior (e.g., a deviation) to other systems. The analyzer 110 may forward the deviation information 665 and the information about the closest stored behavior with metadata 660 via the REST API 670 to a testing team or security operation center.

Alternatively, or in addition, in some example embodiments, if the analyzer 110 determines that no reference graph in the reference graphs DB matches with a part of the target graph 130 corresponding to a period of time during the execution of the application 102, the analyzer 110 may send an alert via the REST API 670 to security operation center or personnel. The alert may indicate that the application 102 may be run in an anormal way.

The architecture 600 may also comprise a security information and event management (SIEM) system analysis 680. The SIEM system analysis 680 may be used for storing, analyzing and reporting information about security threats and events, e.g., security orchestration and automation response (SOAR).

In some example embodiments, the architecture 600 may also involve a testing team 690. The testing team 690 may be the development team in charge of testing the application 102 (program/microservice). The SIEM system analysis 680 may transmit the deviation information 665 and information about the closest stored behavior with metadata 660 to the testing team 690.

In some example embodiments, if the analyzer 110 detects a deviation, which is not covered by the behavioral reference graphs, there are two options: one is that the deviation is a good behavior that was not mapped during the testing phase, or another is that the deviation may be the sign of an ongoing attack.

The analyzer 110 may map the current behavior to the nearest stored behaviors and retrieves the metadata for the closest stored behavior (or closest n behaviors). The deviation, along with the data of the closest behavior and the retrieved metadata about the behaviors the application 102 has displayed may be taken and sent for analysis in the SIEM system analysis 680 where the analysts will investigate whether the deviation is due to lack of test coverage (a good behavior) or due to an attack.

If the deviation is due to a lack of test coverage, the same information may be forwarded to the testing team 690 or the development team to write a test that covers this behavior.

If the deviation is a sign of an ongoing attack, the security operations center (SOC) analysts may have detailed information about what the application 102 was doing when the attack was detected. This would speed up their root cause analysis (RCA) process, as the metadata about the functional behavior of the application can help them know which part of it to start investigating in order to pin-point the source of the failure/vulnerability/attack and set mitigation actions in place.

By associating metadata of the test cases to the reference graphs, it may help to identify the root cause of a deviation. During runtime monitoring, if a deviation is detected, the proposed system can compare the deviation to the closest stored reference graph (also referred to as a subgraph). By using the metadata from the tests, it can enrich the security incident with a timeline of the functions or test cases that had been running up until the point the deviation happened. This would help SOC people to perform root cause analysis and speed up the process by guiding them to the specific part of the code or functionality to look for further investigation. Instead of investigating the whole microservice or container, now they can focus on the use case of the test indicated by the behavior analysis result.

FIG. 7A illustrates further examples of API behaviors according to some example embodiments of the present disclosure. The application 102 may have two API endpoints. The graph 710 represent an API with an endpoint /READ, while the graph 720 represents an API with an endpoint /CREATE.

If the /READ endpoint is interacted with, it may trigger the following system calls: if the stack size is 18040, it conducts a syscall 2; if the stack size is 18168, it conducts a syscall 0; and if the stack size is 18312, it conducts a syscall 3.

If the /CREATE endpoint is interacted with, it may trigger the following system calls: if the stack size is 17752, it conducts a syscall 2; if the stack size is 17864, it conducts a syscall 1; and if the stack size is 17960, it conducts a syscall 3.

Two test suites may be performed to test the behavior of the above two endpoints. A test suite 1 may test create endpoint, which interacts with the /CREATE endpoint. A test suite 2 may test read endpoint, which interacts with the /READ endpoint.

By running the test suite 1, a reference graph 730 may be built as shown in FIG. 7B. The reference graph 730 may be built by the reference graph builder 640 or other suitable component or device. The number shown in the blocks in the reference graph 730 may represent the stack size. The number shown in the bracket "[ ]" may represent the syscall. For example, "[45]" represent the syscall 45. A node 731 in the reference graph may represent an inferred state of USS 1440. A node 732 may represent an inferred state of USS 17752. A syscall 45 may be conducted at the node 731. A syscall 2 may be conducted at the node 732. Each node in the reference graph 730 may represent an inferred state and contain a timestamp of the corresponding event. The edge in the reference graph 730 may represent a transition between inferred states. The associated metadata of the reference graph 730 may be shown as below.

```
{
    test_name:        "test        create        endpoint",
    start_timestamp:                          "202205161804",
    end_timestamp:                            "202205161807",
    functions        tested:        "create_new_element"
    …
}
```

By running the test suite 2, a reference graph 740 may be built as shown in FIG. 7C. The reference graph 740 may be built by the reference graph builder 640 or other suitable component or device. The number shown in the blocks in the reference graph 740 may represent the stack size. The number shown in the bracket "[ ]" may represent the syscall. For example, "[2]" represent the syscall 2. The associated metadata of the reference graph 740 may be shown as below.

```
{
    test_name: "test read endpoint",
    start_timestamp: "202205161810",
    end_timestamp: "202205161815",
    functions tested: "read_element_details"
    ...
}
```

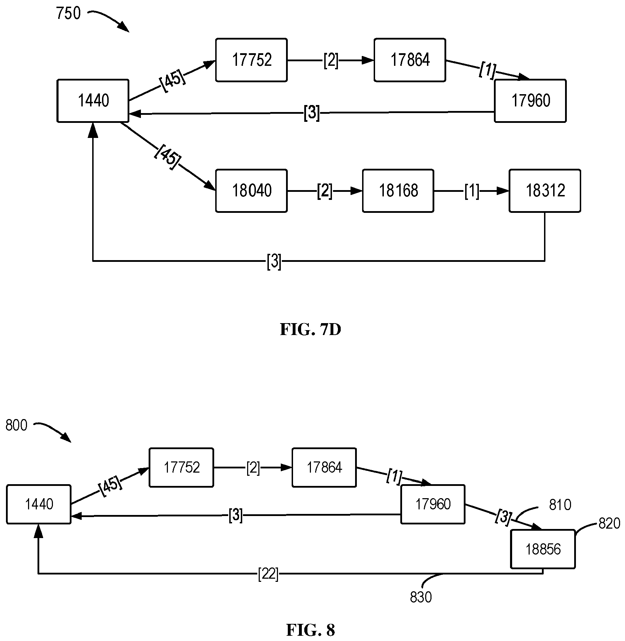

Based on the reference graph 730 and the reference graph 740, an aggregated reference graph 750 for the complete behaviors of the application 102 may be built as shown in FIG. 7D. In addition, a full reference graph (or baseline) with metadata may be shown as below.

```
{
    baseline_name: "api_microservice_baseline",
    behavior: "api_microservise_baseline_graph.json",
    subbehaviors: [
        {
            behavior_name: "create_endpoint_behavior",
            behavior_graph: "create_baseline_graph.json",
            functions_tested: "create_new_element",
            start_timestamp: "202205161804",
            end_timestamp: "202205161807",
        },
        {
            behavior_name: "read_endpoint_behavior",
            behavior_graph: "read_baseline_graph.json",
```

```
        functions_tested: "read_element_details",
        start_timestamp: "202205161810",
        end_timestamp: "202205161815",
    },
    ...
    ]
}
```

During runtime, the application 102 associated with FIG. 7A to FIG. 7D may be monitored and compared to the stored behaviors to detect any deviations. If the application has been attacked (e.g., during runtime by leveraging compromised credentials or using a vulnerability in the application 102), and the behavior of the application 102 has changed. As the system calls made by the compromised application are collected and mapped to the nearest stored behavior, a deviation will be detected.

The behavior of the captured trace from the application 102, such as a target graph 800 of the application 102 may be shown in FIG. 8. with the deviations marked in red. In the target graph 800, the edge 810 (the syscall 3), edge 830 (the syscall 22) and the node 820 (the used stack size 18856) may be marked as deviation(s) compared to the aggregated reference graph 750.

In some example embodiments, the analyzer 110 may map the deviation to a nearest behavior. For example, the mapping may be done by using the graph edit distance, the similarity function (or similarity metric), the inclusion function (or inclusion metric), or the like. It is to be understood that there may be more than one close behavior. The analyzer 110 may report one or more closest behaviors. For example, the analyzer 110 may report n closest behaviors in order of similarity or in order of inclusion probability. The number of closest behaviors reported by the analyzer 110 may be predefined or be set or adjusted by the user or the system. The customizable reporting capability allows the user to choose to report all similar behaviors, the nearest n sub-behaviors or even just the most similar one.

Taking the inclusion function (4) as an example, the analyzer 110 may calculate the inclusion probability of the target graph 800 with two reference graphs 730 and 740 (for the create endpoint behavior and the read endpoint behavior). The inclusion probability between the target graph 800 and the reference graph 730 may be determined by

$$f_{inclusion}(G1, G2) = \frac{|G1 \cap G2|}{|G_1|} = \frac{8}{8} = 1$$

, where $G_1$ denotes the reference graph 730 of the stored create endpoint behavior and $G_2$ is the target graph 800.

The inclusion probability between the target graph 800 and the reference graph 740 may be determined by

$$f_{inclusion}(G1', G2)' = \frac{|G1' \cap G2|}{|G_1'|} = \frac{1}{8} = 0.125$$

, where $G_1'$ denotes the reference graph 740 of the stored read endpoint behavior and $G_2$ is the target graph 800.

Based on the above calculation, the analyzer 110 may determine that the create endpoint behavior is the closest behavior. The analyzer 110 may provide such behavior analysis result for failure analysis. For example, the analyzer 110 may provide stored information about the closest behavior and the runtime behavior of the application 102 and sent it to the SIEM system analysis 680 for the analysts to investigate the deviation.

In this way, the analysts may have detailed information about what the application 102 was doing when the attack was detected. In this case, it was processing a request in its /CREATE endpoint. The analysts may be able to see that after the normal behavior of the /CREATE endpoint, the application 102 is executing two extra syscalls: 3 and 22 as shown in FIG. 8.

The information provided by the analyzer 110 may speed up the investigation process of the analysts as now they know they need to focus their efforts in the part of the codebase that handles the requests to the /CREATE endpoint as opposed to having to look at the complete codebase and start to figure out where the problem is from scratch.

Example embodiments regarding the graph comparison-based behavior analysis and deviation analysis have been described with respect to FIG. 1 to FIG. 8. By using the graph comparison-based behavior analysis and deviation analysis, the SOC analysts can speed up their RCA process and set up mitigations in a timely manner. In addition, a timeline of the functionality the application or the service may be obtained, which will be useful for further analysis of the application or the service.

In some example embodiments, an apparatus capable of performing any of the method 300 (for example, the analyzer 110 in FIG. 1) may comprise means for performing the respective operations of the method 300. The means may be implemented in any suitable form. For example, the means may be implemented in a circuitry or software module. The apparatus may be implemented as or included in the analyzer 110 in FIG. 1.

The apparatus comprises means for obtaining a target graph corresponding to execution of an application. The target graph comprises nodes and edges. A node represents an inferred state of the application during an event and retains a timestamp of occurrence of the corresponding event. An edge represents a transition between states represented by the nodes.

The apparatus comprises means for obtaining a plurality of reference graphs associated with a plurality of behaviors of the application, respectively. A reference graph comprises nodes and edges. A node represents an inferred state of an associated behavior during an event and retains a timestamp of occurrence of the corresponding event. An edge represents a transition between states represented by the nodes.

The apparatus comprises means for determining a plurality of score trends between the target graph and the plurality of reference graphs during execution of the application. In some example embodiments, the means for determining the plurality of score trends may comprise for a given reference graph, means for determining a plurality of matching scores between a plurality of sampled target graph of the target graph and the given reference graph, the plurality of sampled target graph corresponding to a plurality of different time intervals during the execution of the application; and means for determining a given score trend between the target graph and the given reference graph based on the plurality of matching scores.

The apparatus comprises means for determining, based on the plurality of score trends, a first reference graph from the plurality of reference graphs. The first reference graph matches with at least a part of the target graph corresponding to a first period of time during the execution of the application.

The apparatus comprises means for providing a behavior analysis result indicating that the application performs a first behavior during the first period of time. The first behavior is associated with the first reference graph.

In some example embodiments, the means for obtaining the target graph comprises means for in response to a failure of the application, obtaining the target graph corresponding to the execution of the application before the failure. The means for providing the behavior analysis result may comprise means for providing the behavior analysis result for analysis of the failure.

In some example embodiments, the apparatus further comprises means for obtaining metadata associated with the first reference graph. The metadata indicates at least one of the following: events occurred during the execution of the first behavior, functions of the events, an execution order of the events, or durations of the events. In some example embodiments, the apparatus further comprises means for providing the metadata for the analysis of the failure.

In some example embodiments, the means for determining the plurality of matching scores between the target graph and the given reference graph may comprise for a given timestamp of an event of the plurality of events represented by nodes of the target graph, means for extracting a sampled graph from the target graph. The sampled graph may comprise a part of the target graph corresponding to a time interval from an end event of the application to the given event during the execution of the application. In some example embodiments, the means for determining the plurality of matching scores between the target graph and the given reference graph may comprise means for determining a given matching score between the sampled graph and the given reference graph.

In some example embodiments, the means for determining the given matching score between the sampled graph and the given reference graph may comprise means for determining a similarity between the sampled graph and the given reference graph.

In some example embodiments, a first score trend for the first reference graph indicates an increase of a similarity from an end event to a start event during the first period of time, and each of other score trends of the plurality score trends indicates one of the following: a lower similarity than the similarity of the first score trend from an end event to a start event during the first period of time, or a decrease of a similarity from an end event to a start event during the first period of time.

In some example embodiments, the means for determining the given matching score between the sampled graph and the given reference graph may comprise means for determining an inclusion probability of the sampled graph being included by the given reference graph.

In some example embodiments, a first score trend for the first reference graph indicates an increase of an inclusion probability from an end event to a start event during the first period of time, and each of other score trends of the plurality matching trends indicates a decrease of an inclusion probability from an end event to a start event during the first period of time.

Alternatively, or in addition, in some example embodiments, a first score trend for the first reference graph indicates an increase or an invariance of an inclusion probability from an end event to a start event during the first period of time, and each of other score trends of the plurality score trends indicates a lower inclusion probability than the inclusion probability of the first matching trend from an end event to a start event during the first period of time.

In some example embodiments, the means for determining the plurality of matching scores between the target graph and the given reference graph may comprise for a given timestamp of an event of the plurality of events represented by nodes of the target graph, means for extracting a sampled graph from the target graph. The sampled graph may comprise a part of the target graph corresponding to a time interval from a start event of the application to the given event during the execution of the application. In some example embodiments, the means for determining the plurality of matching scores between the target graph and the given reference graph may comprise means for determining a given matching score between the sampled graph and the given reference graph.

In some example embodiments, the apparatus may further comprise means for determining, based on the plurality of score trends, a second reference graph from the plurality of reference graphs. The second reference graph may match with at least a part of the target graph corresponding to a second period of time during the execution of the application. In some example embodiments, the apparatus may further comprise means for providing a further behavior analysis result indicating that the application performs a second behavior during the second period of time. The second behavior is associated with the second reference graph.

In some example embodiments, the apparatus may further comprise means for updating the target graph by removing the part of the target graph corresponding the first period of time. The updated target graph may correspond to partial execution of the application with events during the first period of time removed from the execution of the application. In some example embodiments, the apparatus may further comprise means for determining a plurality of further score trends between the updated target graph and the plurality of reference graphs during the partial execution of the application.

In some example embodiments, the apparatus may further comprise means for determining, based on the plurality of further score trends, a third reference graph from the plurality of reference graphs. The third reference graph may match with at least a part of the updated target graph corresponding to a third period of time during the partial execution of the application. In some example embodiments, the apparatus may further comprise means for providing a further behavior analysis result indicating that the application performs a third behavior during the third period of time. The third behavior may be associated with the third reference graph.

In some example embodiments, a given reference graph of the plurality of reference graphs is determined by: collecting execution data of a given behavior of the application associated with the given reference graph by instructing test execution of the given behavior within a test environment; extracting, from the execution data, events occurred during the test execution of the given behavior and timestamps of the events; and generating the given reference graph based on the events and the timestamps of the events.

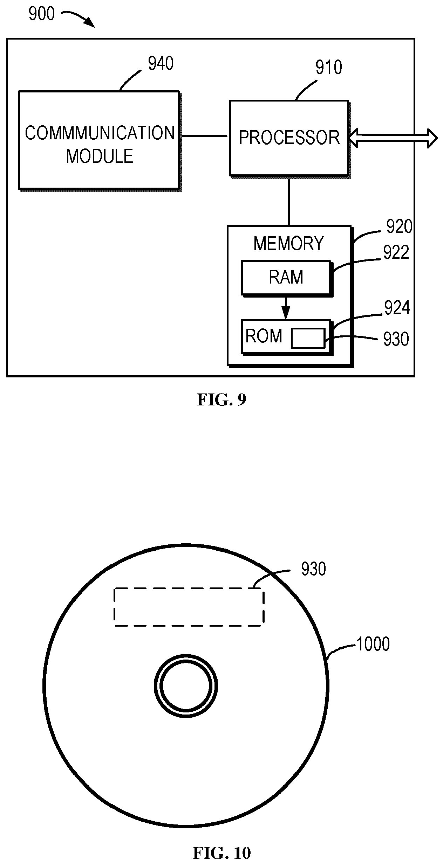

FIG. 9 is a simplified block diagram of a device 900 that is suitable for implementing example embodiments of the present disclosure. The device 900 may be provided to implement a communication device, for example, the analyzer 110 as shown in FIG. 1 may be the device 900 or be implemented in the device 900. As shown, the device 900 includes one or more processors 910, one or more memories 920 coupled to the processor 910, and one or more communication modules 940 coupled to the processor 910.

The communication module 940 is for bidirectional communications. The communication module 940 has one or more communication interfaces to facilitate communication with one or more other modules or devices. The communication interfaces may represent any interface that is necessary for communication with other network elements. In some example embodiments, the communication module 940 may include at least one antenna.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The instructions of the program 930 may include instructions for performing operations/acts of some example embodiments of the present disclosure. The program 930 may be stored in the memory, e.g., the ROM 924. The processor 910 may perform any suitable actions and processing by loading the program 930 into the RAM 922.

The example embodiments of the present disclosure may be implemented by means of the program 930 so that the device 900 may perform any process of the disclosure as discussed with reference to FIG. 3. The example embodiments of the present disclosure may also be implemented by hardware or by a combination of software and hardware.

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 10 shows an example of the computer readable medium 1000 which may be in form of CD, DVD or other optical storage disk. The computer readable medium 1000 has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

**1.** A method comprising:

obtaining a target graph corresponding to execution of an application, the target graph comprising nodes and edges, a node representing an inferred state of the application during an event and retaining a timestamp of occurrence of the corresponding event, and an edge representing a transition between states represented by the nodes;

obtaining a plurality of reference graphs associated with a plurality of behaviors of the application, respectively, a reference graph comprising nodes and edges, a node representing an inferred state of an associated behavior during an event and retaining a timestamp of occurrence of the corresponding event, and an edge representing a transition between states represented by the nodes;

determining a plurality of score trends between the target graph and the plurality of reference graphs during execution of the application,

wherein determining the plurality of score trends comprises: for a given reference graph,

determining a plurality of matching scores between a plurality of sampled target graph of the target graph and the given reference graph, the plurality of sampled target graph corresponding to a plurality of different time intervals during the execution of the application; and

determining a given score trend between the target graph and the given reference graph based on the plurality of matching scores;

determining, based on the plurality of score trends, a first reference graph from the plurality of reference graphs, the first reference graph matching with at least a part of the target graph corresponding to a first period of time during the execution of the application; and

providing a behavior analysis result indicating that the application performs a first behavior during the first period of time, the first behavior being associated with the first reference graph.

2. The method of claim 1, wherein obtaining the target graph comprises:

in response to a failure of the application, obtaining the target graph corresponding to the execution of the application before the failure, and

wherein providing the behavior analysis result comprises: providing the behavior analysis result for analysis of the failure.

3. The method of claim 2, further comprising:

obtaining metadata associated with the first reference graph, the metadata indicating at least one of the following: events occurred during the execution of the first behavior, functions of the events, an execution order of the events, or durations of the events; and

providing the metadata for the analysis of the failure.

4. The method of any of claims 1-3, wherein determining the plurality of matching scores between the target graph and the given reference graph comprises: for a given timestamp of an event of the plurality of events represented by nodes of the target graph,

extracting a sampled graph from the target graph, the sampled graph comprising a part of the target graph corresponding to a time interval from an end event of the application to the given event during the execution of the application; and

determining a given matching score between the sampled graph and the given reference graph.

5. The method of claim 4, wherein determining the given matching score between the sampled graph and the given reference graph comprises:
determining a similarity between the sampled graph and the given reference graph.

6. The method of claim 5, wherein a first score trend for the first reference graph indicates an increase of a similarity from an end event to a start event during the first period of time, and each of other score trends of the plurality score trends indicates one of the following:

a lower similarity than the similarity of the first score trend from an end event to a start event during the first period of time, or

a decrease of a similarity from an end event to a start event during the first period of time.

7. The method of claim 4, wherein determining the given matching score between the sampled graph and the given reference graph comprises:

determining an inclusion probability of the sampled graph being included by the given reference graph.

8. The method of claim 7, wherein a first score trend for the first reference graph indicates an increase of an inclusion probability from an end event to a start event during the first period of time, and each of other score trends of the plurality matching trends indicates a decrease of an inclusion probability from an end event to a start event during the first period of time, or

wherein a first score trend for the first reference graph indicates an increase or an invariance of an inclusion probability from an end event to a start event during the first period of time, and each of other score trends of the plurality score trends indicates a lower inclusion probability than the inclusion probability of the first matching trend from an end event to a start event during the first period of time.

9. The method of any of claims 1-8, further comprising:

determining, based on the plurality of score trends, a second reference graph from the plurality of reference graphs, the second reference graph matching with at least a part of the target graph corresponding to a second period of time during the execution of the application; and

providing a further behavior analysis result indicating that the application performs a second behavior during the second period of time, the second behavior being associated with the second reference graph.

10. The method of any of claims 1-9, further comprising:

updating the target graph by removing the part of the target graph corresponding the first period of time, the updated target graph corresponding to partial execution of the application with events during the first period of time removed from the execution of the application;

determining a plurality of further score trends between the updated target graph and the plurality of reference graphs during the partial execution of the application;

determining, based on the plurality of further score trends, a third reference graph from the plurality of reference graphs, the third reference graph matching with at least a part of the updated target graph corresponding to a third period of time during the partial execution of the application; and

providing a further behavior analysis result indicating that the application performs a third behavior during the third period of time, the third behavior being associated with the third reference graph.

11. The method of any of claims 1-10, wherein a given reference graph of the plurality of reference graphs is determined by:

collecting execution data of a given behavior of the application associated with the given reference graph by instructing test execution of the given behavior within a test environment;

extracting, from the execution data, events occurred during the test execution of the given behavior and timestamps of the events; and

generating the given reference graph based on the events and the timestamps of the events.

12. A device, comprising:

at least one processor; and

at least one memory storing instructions that, when executed by the at least one processor, cause the device at least to perform the method of any of claims 1-11.

13. An apparatus, comprising:

means for obtaining a target graph corresponding to execution of an application, the target graph comprising nodes and edges, a node representing an inferred state of the application during an event and retaining a timestamp of occurrence of the corresponding event, and an edge representing a transition between states represented by the nodes;

means for obtaining a plurality of reference graphs associated with a plurality of behaviors of the application, respectively, a reference graph comprising nodes and edges, a node representing an inferred state of an associated behavior during an event and retaining a timestamp of occurrence of the corresponding event, and an edge representing a transition between states represented by the nodes;

means for determining a plurality of score trends between the target graph and the plurality of reference graphs during execution of the application,
wherein the means for determining the plurality of score trends comprises: for a given reference graph,

means for determining a plurality of matching scores between a plurality of sampled target graph of the target graph and the given reference graph, the plurality of sampled target graph corresponding to a plurality of different time intervals during the execution of the application; and
means for determining a given score trend between the target graph and the given reference graph based on the plurality of matching scores;

means for determining, based on the plurality of score trends, a first reference graph from the plurality of reference graphs, the first reference graph matching with at least a part of the target graph corresponding to a first period of time during the execution of the application; and
means for providing a behavior analysis result indicating that the application performs a first behavior during the first period of time, the first behavior being associated with the first reference graph.

14. A computer-readable medium comprising instructions stored thereon for causing an apparatus at least to perform the method of any of claims 1-11.

**FIG. 1**

**FIG. 2**

300

310

OBTAIN A TARGET GRAPH CORRESPONDING TO EXECUTION OF AN APPLICATION

320

OBTAIN A PLURALITY OF REFERENCE GRAPHS ASSOCIATED WITH A PLURALITY OF BEHAVIORS OF THE APPLICATION

330

DETERMINE, A PLURALITY OF SCORE TRENDS BETWEEN THE TARGET GRAPH AND THE PLURALITY OF REFERENCE GRAPHS DURING EXECUTION OF THE APPLICATION

332

FOR A GIVEN REFERENCE GRAPH, DETERMINE A PLURALITY OF MATCHING SCORES BETWEEN A PLURALITY OF SAMPLED TARGET GRAPH OF THE TARGET GRAPH AND THE GIVEN REFERENCE GRAPH, THE PLURALITY OF SAMPLED TARGET GRAPH CORRESPONDING TO A PLURALITY OF DIFFERENT TIME INTERVALS DURING THE EXECUTION OF THE APPLICATION

334

FOR THE GIVEN REFERENCE GRAPH, DETERMINE A GIVEN SCORE TREND BETWEEN THE TARGET GRAPH AND THE GIVEN REFERENCE GRAPH BASED ON THE PLURALITY OF MATCHING SCORES

340

DETERMINE, BASED ON THE PLURALITY OF SCORE TRENDS, A FIRST REFERENCE GRAPH FROM THE PLURALITY OF REFERENCE GRAPHS, THE FIRST REFERENCE GRAPH MATCHING WITH AT LEAST A PART OF THE TARGET GRAPH CORRESPONDING TO A FIRST PERIOD OF TIME DURING THE EXECUTION OF THE APPLICATION

350

PROVIDE A BEHAVIOR ANALYSIS RESULT INDICATING THAT THE APPLICATION PERFORMS A FIRST BEHAVIOR DURING THE FIRST PERIOD OF TIME

**FIG. 3**

FIG. 4

INCLUSION

530    520    510

535    525    515

LAST EVENT

**FIG. 5A**

INCLUSION

540

550

560    555    545

565

LAST EVENT

**FIG. 5B**

**FIG. 5C**

**FIG. 5D**

**FIG. 6**

**FIG. 7A**

**FIG. 7B**

**FIG. 7C**

**FIG. 7D**

**FIG. 8**

900

940　　　　　　　910

| COMMMUNICATION MODULE | | PROCESSOR |

MEMORY　920
　　　　　922
RAM
　　　　　924
ROM □　930

**FIG. 9**

930

1000

**FIG. 10**

Europäisches
Patentamt

European
Patent Office

Office européen
des brevets

# EUROPEAN SEARCH REPORT

**Application Number**

EP 23 20 6341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/371489 A1 (PURI COLIN ANIL [US] ET AL) 22 December 2016 (2016-12-22)<br>* figures 1,3,4 *<br>* claims 6-8 *<br>* paragraph [0018] *<br>* paragraph [0027] *<br>* paragraph [0051] *<br>* paragraph [0085] – paragraph [0090] *<br>* paragraph [0130] – paragraph [0132] *<br>* paragraph [0148] *<br>----- | 1-14 | INV.<br>G06F11/36<br>G06F11/07<br>G06F11/34 |
| | | | **TECHNICAL FIELDS SEARCHED (IPC)**<br><br>G06F<br>G06N |

The present search report has been drawn up for all claims

| Place of search | Date of completion of the search | Examiner |
|---|---|---|
| Munich | 25 March 2024 | Alonso Nogueiro, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 6341

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2024

| Patent document cited in search report | Publication date | Patent family member(s) | Publication date |
|---|---|---|---|
| US 2016371489 A1 | 22-12-2016 | AU 2016204068 A1 | 12-01-2017 |
| | | AU 2016204072 A1 | 12-01-2017 |
| | | CA 2933423 A1 | 17-12-2016 |
| | | CA 2933426 A1 | 17-12-2016 |
| | | EP 3107026 A1 | 21-12-2016 |
| | | US 2016371489 A1 | 22-12-2016 |
| | | US 2016373476 A1 | 22-12-2016 |
| | | US 2018322283 A1 | 08-11-2018 |

EPO FORM P0459

For more details about this annex : see Official Journal of the European Patent Office, No. 12/82